# EUROPEAN PATENT APPLICATION

(11) **EP 0 574 062 A1**
(43) Date of publication of application: **15.12.1993**
(21) Application number: 93201481.4
(22) Date of filing: 25.05.1993
(51) Int. Cl.: G01L 5/10

(54) **Device for measuring tensile stress in thin wires**

(30) Priority: 10.06.1992 NL 9201019
(71) Applicant: TE STRAKE B.V., NL-5750 AA Deurne (NL)
(72) Inventor: Jeuken, Gerardus Wilhelmus, NL-5751 St Deurne (NL)
(74) Representative: Timmermans, Anthonius C.Th., Ir.

(57) **Abstract**

Device for measuring the tension in thin wires (7) under tensile stress, in particular applicable in weaving looms, which device contains a measuring head with two wire guides (2,3) at a distance from one another and rigidly connected to the housing (1) of the said measuring head, and containing a feeler (4) which lies outside the connecting line of the wire guides and which can move between the wire guides in a direction practically perpendicular to the said connecting line, whereby the feeler is in direct or indirect contact with a piezo-electric element (6) whose generated electric voltage is fed to a measuring instrument.

## Description

The invention pertains to a device for measuring the tension in thin wires under tensile stress, and is particularly applicable in weaving looms. A known device for this purpose contains a measuring head with two wire guides at a distance from one another and rigidly connected to the housing of the said measuring head, and contains a feeler which lies outside the connecting line of the wire guides and which can be moved between the wire guides in a direction practically perpendicular to the said connecting line. The wire in which the tensile stress is to be measured is fed via the feeler from one of the wire guides to the other wire guide. Due to the fact that the wire does not lie in the connecting line of the two wire guides, a certain kink will arise, whereby the uppermost point of the kink rests on or in the feeler. Both the wire guides and the feeler can consist of eyes through which the wire runs, or of pins on which the wire rests. The force from the kink perpendicular to the feeler is a measure of the tensile stress in the wire. This force can be measured in different fashions. In a known method, for example, a stretch strip is connected to the feeler, and the resistive change in the stretch strip is measured with respect to a zero value.

The device as described above can be used to measure the tensile stress in stationary or in moving wires. Almoststationary wires are, for example, the warp yarns in a weaving loom; moving wires are, for example, the weft yarns in a weaving loom, and the wires in winding machines, for example, for the production of coils or armatures for motors.

It appears in practice that, for machines in which the wire moves very quickly, such as in modern winding machines for coils and armatures and in weaving looms, where the weft yarn is guided through the chain wires by air pressure, the sensitivity of a stretch strip and the reproducibility of the change of resistance thereof often leave much to be desired.

In an apparatus according to the invention, this problem is avoided through the use of a measuring head of the type described above, which is characterised in having a direct or indirect connection between the feeler and a piezo-electric element whose generated electric voltage is fed to a measuring instrument.

In a particular embodiment of the invention, the feeler comprises an elastic element fixed to one side of the measuring head housing, whereby the elastic tension of said element is adjustable. The stationary wire guides of the measuring head are preferably eye-shaped and provided with a slot for the insertion of the wire.

According to a preferred embodiment of the measuring head according to the invention, the moving feeler is connected to the piezo-electric element via a liquid coupling. Such a liquid coupling can be formed, for example, by a cavity filled with a non-compressible liquid, which cavity is sealed by a flexible membrane against which the feeler rests and on whose other side the piezo-electric element is placed. The presence of the non-compressible liquid ensures that an extremely reliable coupling is formed between the feeler and the piezo-electric element. The measuring head then preferably consists of an oblong tubular housing, on top of which is located a transverse on plate perpendicular to the axis of the housing, which transverse plate carries the stationary wire guides and the feeler, and whereby the liquid coupling is largely situated in the tubular portion.

The invention shall now be elucidated on the basis of a drawing, wherein:
Figure 1 is a schematic view in cross section of the measuring head, to be used in an apparatus in accordance with the invention;
Figure 2 is a representation of a plan-view of figure 1;
Figure 3 is a representation of a detail-view of figures 1 and 2;
Figure 4 is a depiction of a cross section of a practical embodiment of a measuring head for use in an apparatus according to the invention;
Figure 5 is a depiction of a sectional view of a detail of a particular embodiment of figure 4;
Figure 6 is a schematic representation of a weaving loom, whereby the invention can be applied.
Figure 7 is a graphical rendition of a measurement performed on a weaving loom according to figure 6, with a device according to the invention.

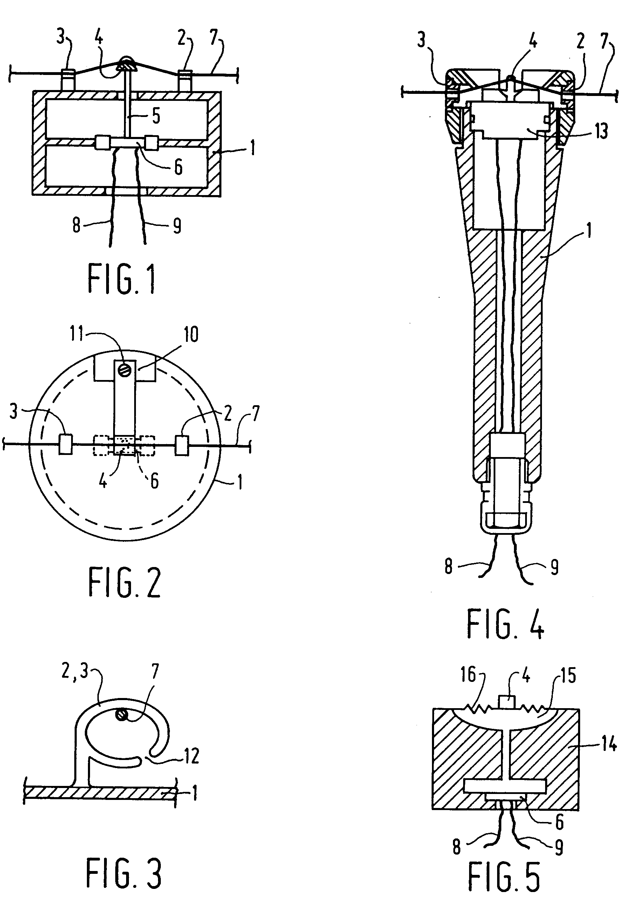

In the schematic view of a measuring head according to figure 1, the housing of the measuring head is indicated by 1. The upper side of this housing carries two unmovable eye-shaped wire guides 2 and 3. The movable feeler is indicated by 4. 7 indicates the wire whose tensile stress is to be measured, which wire passes through the eyes 2 and 3 and over the feeler 4, which feeler can move in a vertical direction. As is evident from the figure, the place where the wire 5 touches the feeler 4 lies outside the connecting line of the eyes 2 and 3. This results in a kink in the wire 7. The force exerted on the feeler is dependent upon the size of the kink and the tensile stress in the wire 7. The vertical motion of the feeler 4 is coupled via the connection 5 to the piezo-electric element 6, which is fixed to the housing. The electrical voltage which results from this motion is fed via the wires 8 and 9 to a measuring instrument, which can be, for example, an oscilloscope. Naturally, the kink between the wire guides 2 and 3 must not be too large, as this could otherwise lead to deformation and a possible fracturing of the wire 7. It appears in practice that a very small motion of the feeler is sufficient to generate sufficient voltage from a suitably chosen piezo-electric element to provide a clear signal, if necessary after amplification.

Figure 2 is a plan view of the measuring head according to figure 1, in which figure the related components are depicted with the same reference numbers. The feeler 4 is connected to a portion of the housing at 10. The pre-tension of the feeler 4 is preferably adjustable e.g. by means of a screw device 11.

Figure 3 depicts a particularly favourable embodiment of the guide eyes 2 and 3, according to figure 1 or 2. The guide eye has a slot 12, which facilitates the insertion of the wire. The guide eyes may be fabricated from an arbitrary material, but in general the use of a ceramic material is preferable.

Figure 4 depicts, partially in cross section, a practical embodiment of the entire measuring head. This figure also retains identical numerical notation for components common to figures 1, 2 and 3. The tubular holder 1 of the measuring head has a holder 13 in which the piezo-electric element is situated.

Figure 5 depicts a particular embodiment of the holder for the piezo-electric element. This holder comprises a block 14, in which a cavity 15 with the depicted shape is situated. This cavity 15 is sealed on its upper side with a flexible membrane 16, against which the feeler 4 rests. The cavity 15 is filled with a non-compressible liquid, which can be for example a silicon oil, and contains the piezo-electric element 6 on its lower side.

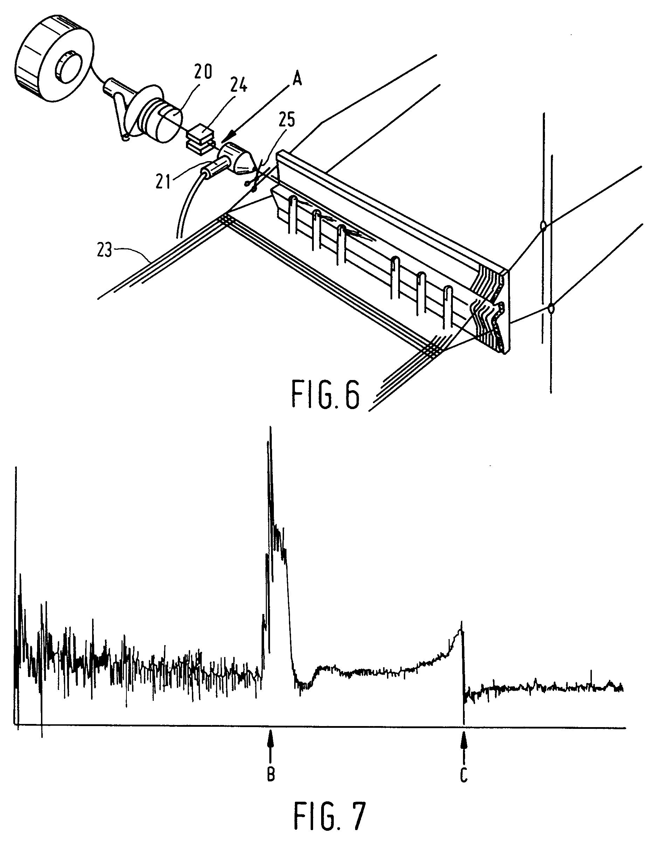

Figure 6 depicts a known weaving loom to which the invention can be usefully applied. In this known weaving loom, the weft yarn is shot between the warp yarns by air pressure. The speed of the weft yarn can thereby reach values of more than 50 m/sec.

In this known machine the weft yarn is stored on a storage spool 20 and is shot between the warp yarns 23 with the aid of an air injector 21. A so-called stopper 24 is placed between the injector 21 and the spool 20, which stopper is used to abruptly halt the motion of the yarn at insertion when the correct length corresponding to the width of the field of the warp yarns has passed through. The weft yarn is subsequently cut at 25. Because these manipulations occur in rapid succession it is of the utmost importance that the tensile stress in the weft yarns can be controlled, for example through adjustment means in the injector. It is naturally of great importance thereby that the tension in the weft yarns can be measured during the operation of the weaving loom, so that such measurements can if necessary be used to influence adjustments. This measuring can now be performed to great advantage by placing a measuring head (as, for example, depicted in the preceding figures 1 to 5) at the position of arrow A.

Figure 7 depicts a graph of a measurement in a weaving loom according to figure 6, fitted with a measuring head according to the invention. The length of the weft yarn is set out on the x-axis, and on the y-axis, in relative units, the value of the measured tensile stress in the yarn is shown. As the overshoot of the wire, the stopper comes into working at the point shown by arrow B. It is understandable that the tensile stress rises extremely quickly at this point, as is evident from the graph. Arrow C is used to indicate the point at which the yarn is cut. To realise a uniform regular weaving it is of the utmost importance that, in particular in blocking the wire, the maximum tension in the yarn does not exceed a particular value, as otherwise fracturing could possibly occur. The weaver wants therefore to observe, preferably visually, the variations in the tensile stress in the weft yarn. As necessary, he will use these observations to implement any desired alterations.

In an apparatus according to the invention, it is possible to guide several wires through the measuring head. The wires do not have to be circular but may also be flat, or may have a differently-formed cross section. Metal wires, which may or may not be provided with an isolating layer, can also be measured; a fabric can also be formed from these wires. The thickness of the wires to be measured with the help of an apparatus according to the invention, is naturally dependent upon the application of the wires. It will normally not exceed 1mm.

The measuring instrument used to process the signal from the piezo-element can, amongst other possibilities, include an amplifier, a filter, a control panel and settings panel, and an oscilloscope. These elements can be united in a so-called measurement rig.

## Claims

1. Device for the measurement of tension in thin wires under tension, in particular in weaving looms, which device is fitted with a measuring head and with two separated wire guides fitted rigidly to the housing of the measuring head, between which wire guides, outside the connecting line of said wire guides and in a direction almost perpendicular to said connecting line, is a movable feeler, which feeler is characterised in that it is connected directly or indirectly with a piezo-electric element whose generated electric voltage is supplied to a measuring instrument.

2. Device according to claim 1, characterised in that the transfer of force from the feeler to the piezo-electric element is almost parallel to, or coincides with, the direction in which the piezo-electric element is sensitive.

3. Device according to claim 1 or 2, characterised in that the feeler is composed of an elastic element with adjustable elastic tension, which elastic element is attached to one side of the housing of the measuring head.

4. Device according to claim 1, 2, or 3, characterised in that the stationary wire guides are eye-shaped, with a slot for the insertion of the wire.

5. Device according to claim 1, 2, 3, or 4, characterised in that the movable feeler is coupled to the piezo-electric element via a liquid coupling.

6. Device according to claim 5, characterised in that the liquid coupling is formed by a cavity containing a noncompressible liquid, which cavity is sealed on the side of the feeler with a flexible membrane, against which membrane the feeler rests and on whose opposite side the piezo-electric element is situated.

7. Device according to claim 1, 2, 3, 4, 5, or 6, characterised in that the measuring head consists of an oblong tubular housing, upon whose upper side, perpendicular to the axis of the housing, a transverse plate is situated, which plate carries the wire guides and the feeler and whereby the liquid coupling is situated largely in the oblong portion.

8. Device according to one or more of the preceding claims, characterised in that the measuring instrument contains, amongst other possibilities, an amplifier, filters, a control panel and settings panel, and an oscilloscope.

9. Weaving loom whereby the weft yarns are shot between the warp wires by air pressure, characterised in that the tensile stress in the weft yarns is measured with a device according to one or more of the preceding claims.
